# EUROPÄISCHE PATENTANMELDUNG

(11) **EP 3 744 458 A1**
(43) Veröffentlichungstag der Anmeldung: **02.12.2020**
(21) Anmeldenummer: 19177092.4
(22) Anmeldetag: 28.05.2019
(51) Int. Cl.: B23D 65/00, B27B 33/14, B23K 35/30, B32B 15/01, C21D 9/50, C22C 38/10, C22C 38/12, C22C 38/22, C22C 38/34

(54) **SCHNEIDGLIED FÜR EINE SÄGEKETTE UND VERFAHREN ZU DEREN HERSTELLUNG**

(71) Anmelder: Voestalpine Precision Strip GmbH, 3333 Böhlerwerk (AT)
(72) Erfinder: LEEB, Bernhard, A-3352 St. Peter in der Au (AT); RÖCKLINER, Gerhard, 3353 Biberbach (AT)
(74) Vertreter: Reitstötter Kinzebach

(57) **Zusammenfassung**

Die Erfindung betrifft eine Schneidglied (11) für eine Sägekette, ein Verfahren zu dessen Herstellung, sowie mit derartigen Schneidgliedern versehene Sägeketten. Das erfindungsgemäße Schneidglied umfasst einen Trägerteil (16) aus einer bruchfesten Stahllegierung und ein mit dem Trägerteil (16) entlang einer Schweißverbindung (18) verschweißtes Schneidteil (17) aus einem Schnellarbeitsstahl und ist dadurch gekennzeichnet, dass das Stahlmaterial des Trägerteils (16) im vergüteten Zustand eine Härte von mehr als 600 HV und eine Zugfestigkeit von mehr als 2000 MPa aufweist.

## Beschreibung

Die vorliegende Erfindung betrifft ein Schneidglied für eine Sägekette, eine mit derartigen Schneidgliedern ausgerüstete Sägekette für Motorkettensägen und ein Verfahren zur Herstellung derartiger Schneidglieder.

Motorkettensägen sind Sägen, welche als Schneid- oder Trennmittel eine geschlossene, mit Schneidkanten versehene Gliederkette aufweisen, die auf einer längsgestreckten Führungsschiene umläuft. Die Gliederkette umfasst üblicherweise Treibglieder, abwechselnd linksseitig und rechtsseitig angeordnete Schneidglieder und gegebenenfalls auch Zwischenglieder. Die einzelnen Glieder einer Sägekette sind jeweils beweglich mit Bolzen oder Nieten gegeneinander verbunden.

Der Antrieb der Sägekette erfolgt üblicherweise durch einen Verbrennungs- oder Elektromotor, der ein Ritzel antreibt, welches an einer Seite der Führungsschiene angeordnet ist und mit den Treibgliedern der Sägekette kraftübertragend zusammenwirkt.

Die Schneidglieder bestehen üblicherweise aus einem Schneidkopf und einem vorgelagerten zahnartig ausgebildeten Tiefenbegrenzer. Der Schneidkopf umfasst die für die spanabhebende Sägearbeit notwendige Zahnschaufel. Die Zahnschaufeln sind typischerweise als Halbmeißelzähne mit gebogener Anordnung von Dach- und Brustschneide oder als Vollmeißelzähne mit einem scharf gekanteten Übergang von Dach- und Brustschneide ausgebildet. Bei beiden Ausführungen dient das Zahndach zur Anhebung des Holzspans, wobei hingegen die Brustschneide die seitliche Trennung vom zu schneidenden Werkstoffs übernimmt. Die Spandicke wird hierbei durch den Abstand zwischen Dachschneide und Tiefenbegrenzer bestimmt.

Es sind auch Schneidglieder bekannt, die ohne gebogenen Schneidkopf und ohne Tiefenbegrenzer ausgeführt sind. Derartige alternative Schneidglieder sind beispielsweise in der internationalen Patentanmeldung WO2013/127542 A1 oder in der europäischen Patentanmeldung EP 1 083 031 B1 beschrieben.

Üblicherweise werden die Glieder einer Sägekette für Motorkettensägen, insbesondere für Holzarbeiten, aus niedrig legierten Vergütungsstahl hergestellt. Die Schneidhaltigkeit derartiger Sägeketten ist jedoch gering, sodass ein häufiges Nachschärfen erforderlich ist, was bei diesen Sägeketten durch den versierten Benutzer erfolgen kann. Aus dem Stand der Technik sind Verbesserungen der Standzeit hinsichtlich Verschleißbeständigkeit, Ermüdungsbeständigkeit, Festigkeit, sowie einer verbesserten Niedrig-Temperatur-Zähigkeit bekannt. So wurde bereits versucht die Verschleißbeständigkeit der Schneidzähne durch zumindest teilweises Beschichten, z.B. Hartverchromung einzelner Schneidezähne, zu verbessern. Jedoch ist die Hartverchromung einzelner Zähne aus ökologischen Gesichtspunkten als nachteilig einzustufen. Des Weiteren wurden Schneidglieder aus niedrig legiertem Vergütungsstahl gefertigt, wobei die Schneidköpfe aus Hartmetallplatten ausgeführt und mittels Hartlot stoffschlüssig verbunden sind. Derartige Ausführungsform ist beispielsweise in der europäischen Patentanmeldung EP2052821 B1 beschrieben. In diesem Zusammenhang finden Hartmetallplatten aus feinkörnigem Wolframcarbid, welche beispielsweise durch Kobalt zusammengehalten werden, mengenmäßig die größte Bedeutung.

Ein beachtlicher Fortschritt wird durch die Verwendung von Sägeketten aus Materialverbunden erzielt. Bei diesen Sägeketten bestehen die Schneidglieder der Sägekette aus zwei, den Anforderungen entsprechenden Werkstoffen, welche mittels Laser- oder Elektronenstrahl zu einem Werkstoffverbund verbunden werden. Für den Trägerteil wird eine bruchfeste, kostengünstige Stahllegierung und für den Schneidteil wird eine widerstandsfähige Schnellarbeitsstahllegierung eingesetzt, welche mit dem Trägerteil verschweißt wird.

Derartige Sägeketten sind beispielsweise in der europäischen Patentanmeldung EP 0 592 389 B1 oder der deutschen Patentanmeldung DE4303004C2 bzw. DE 10 2010 011 837 A1 beschrieben. Die dort beschriebenen Sägekettenglieder werden aus einem Werkstoffverbundband ausgestanzt, dass beispielsweise aus einem kostengünstigen ferritischen Stahlband als Trägerteil besteht, an das ein Schneidteil in Form eines hochverschleißfesten Schnellarbeitsstahldrahtes oder -streifens angeschweißt wurde. Die Schneidglieder werden dann mit den für die Vergütung des Schnellarbeitsstahls erforderlichen Parametern gehärtet und angelassen.

Mit herkömmlich kommerziell erhältlichen Werkstoffverbundbändern erreicht man durch die Vergütungsbehandlung am Schneidteil zwar eine sehr hohe Verschleißfestigkeit des Schnellarbeitsstahls, jedoch werden für das Trägerteil nur Zugfestigkeiten von ca. 1700 MPa erreicht. Derartige Festigkeitswerte am Trägerteil sind für den Einsatz in Sägeketten nicht ausreichend. Daher können Sägekettenglieder aus herkömmlichen Werkstoffverbundmaterialien trotz hervorragender Verschleißbeständigkeit des Schneidteiles wegen der unzureichenden Zugfestigkeit des Trägermaterials nicht eingesetzt werden. Zusätzlich liegt dem zu Grunde, dass für die eingesetzte Schnellarbeitsstahllegierung eine entsprechend hohe Austenitisierungstemperatur verwendet werden muss, welche für die Trägerlegierung aber bereits kornvergröbernd bzw. schädigend wirkt.

Der vorliegenden Erfindung liegt daher das technische Problem zugrunde, Schneidglieder für Sägeketten aus einem Werkstoffverbundband bereitzustellen, welches ein Schneidteil aus einem verschleißbeständigen Schnellarbeitsstahl und ein Trägerteil aus einem kostengünstigeren Stahlmaterial mit hoher Zugfestigkeit aufweist. Besonderes Augenmerk liegt hierbei auf der Vergütbarkeit des Trägermaterials, welches eine Vergütung zulässt, die einerseits eine ausreichend hohe Verschleißbeständigkeit des Schnellarbeitsstahls und andererseits ein vergütetes Trägerteil mit hoher Zugfestigkeit und Potential für die erforderliche Wärmebehandlung aufweist.

Gelöst wird dieses technische Problem durch das Schneidglied für eine Sägekette mit den Merkmalen des vorliegenden Anspruchs 1. Vorteilhafte Weiterbildungen des erfindungsgemäßen Schneidgliedes sind Gegenstand der abhängigen Patentansprüche.

Erfindungsgemäß wurde überraschend gefunden, dass es möglich ist, Schneidglieder für Sägeketten aus einem Werkstoffverbundband herzustellen, der einerseits einen Schnellarbeitsstahl und andererseits ein Stahlmaterial mit entsprechenden Eigenschaften für das Trägerteil umfasst, dass das Stahlmaterial des Trägerteils im vergüteten Zustand eine Härte von mehr als 600 HV und eine Zugfestigkeit von mehr als 2000 MPa aufweist.
Bei dem erfindungsgemäßen Schneidglied erfüllt nun auch das Trägermaterial die erhöhten Anforderungen an Zugfestigkeit, welche aus der durch Verwendung von Schnellarbeitsstahl für das Schneidteil resultierenden höheren Standzeiten der Sägekette entstehen.

Die erfindungsgemäßen Schneidglieder können in Sägeketten für standardbetriebene Benzinkettensägen, für Kettensägen mit Elektro- bzw. Akkuantrieb oder mit alternativen Antriebssystemen eingesetzt werden.

Die Standzeiten der resultierenden Sägeketten übersteigen die Standzeiten herkömmlicher Ketten aus Kohlenstoffstahl um ein Vielfaches und eignen sich daher insbesondere für den maschinellen Einsatz. Einerseits bei der Baumfällung im Harvesterbetrieb wirkt sich die höhere Verschleißbeständigkeit sehr positiv in Hinblick auf abrasive Verschmutzungen durch z.B. Sand oder Erdreich im Fällbereich aus und andererseits im Hartholzbereich und in der Weiterverarbeitung von Rundholzsägen in der Schnittholz- und Palettenindustrie z.B. für das exakte Kappen von Bretterpaketen.

Mit dem nun möglich gewordenen Einsatz von Schnellarbeitsstahl als Schneidstoff, kann nicht nur die Verschleißbeständigkeit und somit die Schneidhaltigkeit der Schneidglieder verbessert werden, sondern aufgrund der höheren Zahnhärte kann durch Geometrievariationen die Schneidfreudigkeit der Sägekette entsprechend gesteigert werden. Zusätzlich werden die resultierenden Schnittkräfte der Schneidglieder aufgrund von geringerem Verschleißfortschritt an der Schneidkante signifikant reduziert, was sich speziell bei akkubetriebenen Kettensägen auf eine deutlich erhöhte Laufleistung auswirkt.

Aufgrund der hochfesten Stahllegierung des Trägerteils besitzt der Tiefenbegrenzer bei dem erfindungsgemäßen Schneidglied eine erhöhte Verschleißbeständigkeit gegenüber den aus dem Stand der Technik bekannten Schneidgliedern. Besonders vorteilhaft kann der Tiefenbegrenzer an seinem Kontaktbereich zum Schnittgut aus Schnellarbeitsstahl ausgebildet werden, um die Verschleißbeständigkeit zusätzlich zu verbessern.

Mit den erfindungsgemäßen Sägeketten kann auch Schneidgut geschnitten werden, in welchem sich metallische Fremdkörper, wie beispielsweise Nägel, Schrauben oder Klammern befinden. Die erfindungsgemäße Sägekette ist daher auch insbesondere für Abbrucharbeiten, Hoch- und Tiefbau bzw. generell rauhen Arbeitseinsätzen gut geeignet.

Gemäß einer bevorzugten Ausführungsform weist die Stahllegierung des Trägerteils im vergüteten Zustand eine Härte zwischen 630 und 750 HV und eine Zugfestigkeit zwischen 2100 und 2500 MPa auf.

Besonders bevorzugt ist die Stahllegierung des Trägerteils des erfindungsgemäßen Schneidglieds ein Werkzeugstahl. Überraschend wurde gefunden, dass spezielle Werkzeugstahllegierungen, unter den für die Vergütung von Schnellarbeitsstahl erforderlich Bedingungen, Härtewerte von mehr als 600 HV und eine Zugfestigkeit von mehr als 2000 MPa erreichen können. Derartige Stahllegierungen eignen sich daher ganz besonders für das Trägerteil des Werkstoffverbundbandes für die erfindungsgemäßen Schneidglieder.

Bestehende niedrig legierte Stahllegierungen weisen zu geringe Verschleißbeständigkeit bzw. Festigkeitswerte auf, etwas höher legierte Kaltarbeitsstähle hingegen versagen bei thermischer Belastung; speziell im Hartholzbereich oder wenn höhere Schnittleistungen gefordert werden.

Die Stahllegierung des Trägerteils weist vorzugsweise folgende Zusammensetzung auf (Angaben in Gewichtsprozent):

| | |
|---|---|
| • Kohlenstoff (C) | 0,4 bis 1 |
| • Silicium (Si) | bis 1,8 |
| • Mangan (Mn) | bis 0,6 |
| • Chrom (Cr) | 4,5 bis 12 |
| • Molybdän (Mo) | bis 3 |
| • Vanadium (V) | bis 2 |
| • Eisen (Fe) und erschmelzungsbedingte Begleitelemente und Verunreinigungen als Rest. | |

Besonders bevorzugt weist die Stahllegierung des Trägerteils folgende Zusammensetzung auf (Angaben in Gewichtsprozent):

| | |
|---|---|
| • Kohlenstoff (C) | 0,45 bis 0,8 |
| • Silicium (Si) | bis 1,3 |
| • Mangan (Mn) | bis 0,6 |
| • Chrom (Cr) | 6 bis 10 |
| • Molybdän (Mo) | bis 1,6 |
| • Vanadium (V) | bis 1 |
| • Eisen (Fe) und erschmelzungsbedingte Begleitelemente und Verunreinigungen als Rest. | |

Bevorzugt wird auch der für das Schneidteil verwendete Schnellarbeitsstahl dahingehend optimiert, dass seine Vergütung bei Temperaturen erfolgen kann, welche einerseits eine hohe Verschleißbeständigkeit des Schneidteils gewährleisten, aber andererseits die Ermüdungsfestigkeit des Trägerteils nicht nachteilig beeinflussen. Besonders bevorzugt wird daher ein Schnellarbeitsstahl für das Schneidteil des erfindungsgemäßen Schneidglieds verwendet, der folgende Zusammensetzung aufweist (Angaben in Gewichtsprozent):

| | |
|---|---|
| Kohlenstoff (C) | 0,5 bis 1,1 |
| Silicium (Si) | bis 0,5 |
| Mangan (Mn) | bis 0,5 |
| Chrom (Cr) | 3,5 bis 4,5 |
| Molybdän (Mo) | 2 bis 6 |
| Vanadium (V) | 0,5 bis 3,0 |
| Wolfram (W) | bis 3 |
| Kobalt (Co) | bis 10 |
| Eisen (Fe) und erschmelzungsbedingte Begleitelemente und Verunreinigungen als Rest. | |

Die Erfindung betrifft auch eine Sägekette für Motorkettensägen, die die oben beschriebenen erfindungsgemäßen Treibglieder bzw. Schneidglieder und gegebenenfalls auch Zwischenglieder umfasst, welche mit Bolzen oder Nieten beweglich miteinander verbunden sind.

Die Erfindung betrifft auch die Verwendung der erfindungsgemäßen Sägekette in Rundholzsägen, in Harvestern, in Bretterpaketsägen, in Akkubetriebenen Kettensägen und in Kettensägen für Abbrucharbeiten bzw. in rauher Arbeitsumgebung.

Schließlich betrifft die Erfindung auch ein Verfahren zur Herstellung von erfindungsgemäßen Schneidgliedern wobei wenigstens ein erstes, zentrales flächiges Bandmaterial aus Schnellarbeitsstahl an dessen beiden Bandkanten entlang ein zweites bzw. drittes flächiges Bandmaterial aus einer vergütbaren und bruchfesten Stahllegierung mittels Schweißnähten zur Bildung eines Werkstoffverbundbandes miteinander verschweißt werden. Die Schneidglieder werden derart aus dem Verbundmaterial entnommen, dass das Trägerteil eines Schneidgliedes aus dem zweiten oder dritten flächigen Bandmaterial und das Schneidteil eines Schneidgliedes aus dem ersten flächigen Bandmaterial besteht. Die Entnahme erfolgt bevorzugt durch Ausstanzen bzw. Ausschneiden von Schneidgliederrohlingen. Nach den entsprechenden Umformschritten werden die Schneidglieder zum Härten auf eine Temperatur oberhalb der Austenitisierungstemperatur des Schnellarbeitsstahls erwärmt, abkühlt und gegebenenfalls mehrmals angelassen. Dabei beträgt die Temperatur oberhalb der Austenitisierungstemperatur des Schnellarbeitsstahls bevorzugt mehr als 1000°C und besonders bevorzugt liegt diese Temperatur im Bereich von 1050°C bis 1200°C. Zur Erzielung der erforderlichen Arbeitshärte bzw. Verschleißbeständigkeit werden die Schneidglieder bei 500°C-600°C gegebenenfalls mehrmals angelassen. Die Schneidglieder werden schließlich in an sich bekannter Weise angeschliffen bzw. geschärft.

Die zweiten und dritten flächigen Bandmaterialien bestehen aus der erfindungsgemäßen vergütbaren und bruchfesten Stahllegierung. Vorzugsweise bestehen die zweiten und dritten flächigen Bandmaterialien aus derselben Legierung.

Der Tiefenbegrenzer kann aus dem zweiten oder dritten flächigen Bandmaterial bestehen. Vorzugsweise werden die Schneidgliederrohlinge aber derart aus dem Werkstoffverbundband entnommen, dass der Tiefenbegrenzer zumindest teilweise aus dem flächigen Bandmaterial aus Schnellarbeitsstahl besteht.

Die Erfindung wird im Folgenden unter Bezugnahme auf in den beigefügten Zeichnungen dargestellte bevorzugte Ausführungsformen näher erläutert.

In den Zeichnungen zeigt:
- Fig. 1: einen Ausschnitt einer Sägekette in der Seitenansicht;
- Fig. 2: eine Ausführungsform eines Schneidglieds der Sägekette der Fig. 1; bestehend aus einem Werkstoffverbund und einer Schweißnaht;
- Fig. 3: einen Querschnitt durch den Schneidezahn eines erfindungsgemäßen Schneidgliedes;
- Fig. 4: einen Werkstoffverbund mit schematisch dargestellten Stanzrohlingen;
- Fig. 5: Vergleichsaufnahmen des fortschreitenden Verschleißes an erfindungsgemäßen Schneidkanten und Schneidkanten des Standes der Technik; und
- Fig. 6: ein Diagramm des quantitativ gemessenen Verschleißes als Funktion des Zerspanwertes;

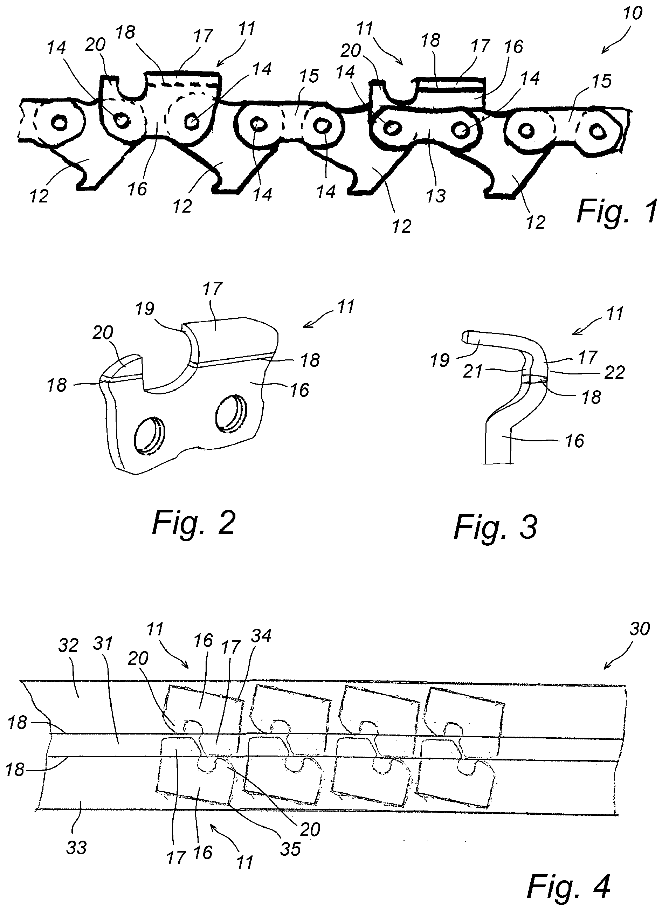

Figur 1 zeigt eine Seitenansicht einer Sägekette, wie sie beispielsweise in der europäischen Patentanmeldung EP 0 592 389 B1 näher erläutert ist. Die insgesamt mit der Bezugsziffer 10 bezeichnete Sägekette weist eine Abfolge von Schneidgliedern 11 und Treibgliedern 12 auf. Die Schneidglieder 11 sind zusammen mit Gegengliedern 13 über Nieten 14 mit den Treibgliedern verbunden. Im dargestellten Beispiel sind außerdem Treibglieder untereinander über Zwischenglieder 15 durch Nieten 14 miteinander verbunden. Jedes Schneidglied 11 weist ein Trägerteil 16 aus Baustahl und ein Schneidteil 17 aus Schnellarbeitsstahl auf. Das Trägerteil 16 und das Schneidteil 17 sind entlang einer Schweißnaht 18 miteinander verbunden. Die Schneidglieder 11 weisen Tiefenbegrenzer 20 auf, welche in der Ausführungsform der Fig. 1 vollständig aus der bruchfesten Stahllegierung des Trägerteils 16 bestehen.

Fig. 2 zeigt eine dreidimensionale Ansicht einer erfindungsgemäßen Ausführungsform eines Schneidgliedes 11. Das Schneidglied 11 der Ausführungsform der Fig. 2 entspricht im Wesentlichen dem Schneidglied 11 der Sägekette der Fig. 1. Das Trägerteil 16 ist aus Werkzeugstahl mittels Schweißnaht 18 mit dem Schneidteil 17 aus Schnellarbeitsstahl verbunden. Aus dem Schneidteil 17 wird der Schneidezahn 19 und, in Abweichung zu der Variante der Fig. 1, zumindest ein Teilbereich eines Tiefenbegrenzers 20 gebildet. Durch die deutlich verbesserte Standzeit des Schneidezahns wird nämlich auch der Tiefenbegrenzer einem verstärkten Abrasionsverschleiß ausgesetzt. Da in dieser erfindungsgemäßen Ausführungsform der Tiefenbegrenzer aber ebenfalls aus Schnellarbeitsstahl ausgeführt ist, kann dieser dem erhöhten Abrasionsverschleiß gut standhalten.

Fig. 3 zeigt einen Querschnitt eines Schneidgliedes im Bereich des Schneidezahns 19. Die Querschnittsdarstellung zeigt besonders die Position und die Form der Schweißnaht 18 beim Übergang vom Trägerteil 16 zum Schneidteil 17 besonders deutlich. Dargestellt sind auch die kleinere Schweißnahtbreite der Wurzelnaht an der Schneidzahnaußenseite 22 und die größere Schweißnahtbreite bzw. die Oberraupe an der spannungsreduzierten Schneidzahninnenseite 21 des Schneidezahns 19.

Fig. 4 zeigt ein Werkstoffverbundband 30 zur Herstellung von Schneidgliedern für die erfindungsgemäße Sägekette. Das Werkstoffverbundband wird mittels Laser- oder Elektronenstrahlschweißeinrichtungen hergestellt und durch gezielte Positionierung des Verbundbandes bei der Entnahme der Schneidgliedrohlinge und anschließender Umformung wird der Schweißnahtverlauf so angeordnet, dass sich die kleinere Schweißnahtbreite der Wurzelnaht an der Außenseite 22 des späteren Schneidezahns 19, und die größere Schweißnahtbreite bzw. die Oberraupe mit etwaigen Einbrandkerben bzw. mit etwaigen Schweißnahtrillen an der bei der Umformung des Schneidezahns entstehenden, spannungsreduzierten Schneidezahninnenseite 21 befindet. Dies ist insbesondere in der Querschnittsdarstellung der Fig. 3 gut erkennbar.

Wie man der Fig. 4 entnimmt, besteht das Werkstoffverbundband 30 aus einem ersten, zentralen flächigen Bandmaterial 31 aus Schnellarbeitsstahl, an dessen beiden Bandkanten entlang ein zweites bzw. drittes flächiges Bandmaterial 32, 33 entlang von Schweißlinien 18 angeschweißt wird. Die schematisch angedeuteten Stanzkonturen 34, 35 sind so angeordnet, dass sich das Trägerteil 16 der späteren Schneidglieder 11 in dem zweiten und dritten flächigen Bandmaterial 32, 33 aus Werkzeugstahl befindet, während das Schneidteil 17 im Bereich des ersten, zentralen flächigen Bandmaterials 31 aus Schnellarbeitsstahl angeordnet ist. Man erkennt, dass durch gezielte Anordnung der Stanzkonturen zu beiden Seiten des flächigen Schnellarbeitsstahlbandes 31 Schneidglieder 11 mit besonders wenig Materialverlust bzw. rechte / linke Schneidglieder aus dem Werkstoffverbundband herausgetrennt werden können. Bei dieser Ausführungsform sind die Stanzkonturen 34, 35 so angeordnet, dass sich der Tiefenbegrenzer 20 vollständig im Bereich des zweiten und dritten Bandmaterials 32, 33 befindet, also wie in Fig. 1 ohne Schnellarbeitsstahl ausgeführt ist. Man erkennt aber auch, dass durch gezielte Wahl der Geometrie der Stanzkonturen 34, 35 die Ausführungsform der Figur 2 herstellbar wäre, bei der die Spitze des Tiefenbegrenzer 20 dann in das erste Bandmaterial aus Schnellarbeitsstahl hineinreichen würde.

### Vergleichsversuche

Der vorteilhafte Einsatz von Sägeketten, bei denen die Schneidglieder aus dem erfindungsgemäßen Materialverbund bestehen, wird in den folgenden Vergleichsversuchen dargestellt.

### 1. Verschleißbeständigkeit

Um die Verschleißbeständigkeit des erfindungsgemäßen Materialverbundes zu beurteilen, wurden Zerspanversuche an sogenannten Holzwolle-Leichtplatten durchgeführt. Derartige Platten werden aus langfaserigem, gehobeltem Fichten- oder Kiefernholz hergestellt, wobei diese Fasern durch Zement gebunden sind. Derartige Verschleißversuche stellen äußerst praxisnahe Fälle nach, welche insbesondere im Hinblick auf häufig auftretende abrasive Verschmutzungen im Holz, wie beispielsweise Sand oder typischerweise im Fällbereich durch Erdreich relevant sind.

Für derartige Versuche wurden Hobelmesser aus dem Schneidstoff des erfindungsgemäßen Materialverbundes, im konkreten aus einem Schnellarbeitsstahl-Schneidteil (Zusammensetzung (in wt.%): 0,75% C, 0,3% Si, 0,25% Mn, 4% Cr, 5% Mo, 1% V, 1% W, 8% Co) und einem Werkzeugstahl-Träger (Zusammensetzung (in wt.%): 0,55% C, 1% Si, 0,4% Mn, 8% Cr, 0,5% Mo, 0,5% V) mit einem Schneidwinkel von 47 Grad hergestellt. Diese Hobelmesser wurden mit geometrisch entsprechenden Hobelmessern aus einem konventionellen Kohlenstoffstahl der Güte 63NiNb4, wie er herkömmlicherweise in der Sägeindustrie eingesetzt wird, verglichen. Die Bewertung des Verschleißfortschrittes wurde durch Vermessung der Schneidgeometrie nach definierten Zerspanwegen (*L*_{W}) durchgeführt.

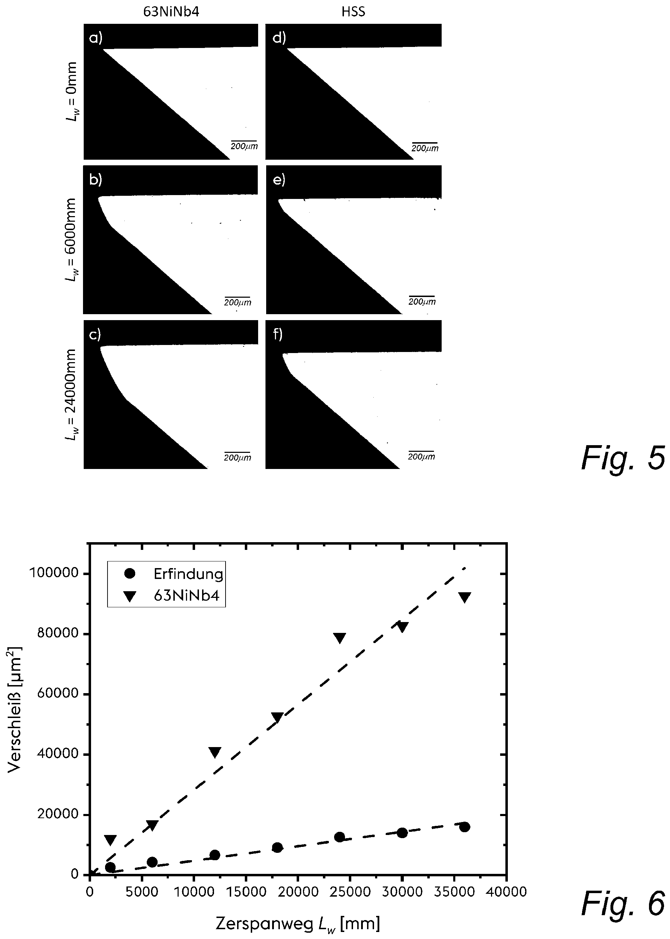

Fig. 5 zeigt repräsentativ den fortlaufenden Verschleiß der Schneidkanten. Die Figuren 5a), 5b) und 5c) zeigen den Verschleiß der herkömmlichen Hobelmesser aus Kohlenstoffstahl vor Beginn des Verschleißversuchs (*L*_{W} = 0 mm bzw. bei Zerspanwegen von 6.000 mm und 24.000 mm. Die Figuren 5d), 5e) und 5f) zeigen entsprechende Ergebnisse bei Hobelmessern, deren Schneidkante erfindungsgemäß aus Schnellarbeitsstahl besteht. Man erkennt deutlich, dass der Verschleiß an der Schneidkante des konventionellen Kohlenstoffstahls signifikant höher, als beim Schnellarbeitsstahles des erfindungsgemäßen Materialverbundes, ist.

Um den Verschleißfortschritt zu quantifizieren, wurde der geometrische Flächenverlust vermessen und über den Zerspanweg aufgetragen. Die entsprechenden Ergebnisse (quantitativ gemessener Verschleiß als Funktion des Zerspanwegs) sind in dem Diagramm der Fig. 6 für Schneidkanten aus Kohlenstoffstahl 63NiNb4 bzw. einem Schneidstoff des erfindungsgemäßen Materialverbundes dargestellt. Die Daten lassen sich gut durch Regressionsgeraden wiedergeben, aus deren Steigung Verschleißraten ermittelt werden können. So ergibt sich für den Kohlenstoffstahl 63NiNb4 eine Verschleißrate von 2,8304 µm²/mm, und für den Schnellarbeitsstahl des erfindungsgemäßen Materialverbundes eine Verschleißrate von 0,481 µm²/mm. Diese Auswertung verdeutlicht den besonders vorteilhaften Einsatz von Schneidgliedern, die aus dem erfindungsgemäßen Materialverbund hergestellt sind.

### 2. Wärmebehandlung

Wie aus den vorangegangenen Verschleißuntersuchungen hervorgeht, zeigt der Schneidstoff des erfindungsgemäßen Materialverbundes eindeutig besseres Verschleißverhalten als ein konventioneller Kohlenstoffstahl. Diese erhöhte Verschleißbeständigkeit kann lediglich durch den Einsatz eines Schnellarbeitsstahls realisiert werden. Der Einsatz dieses Schnellarbeitsstahls wiederum erfordert jedoch eine erhöhte Austenitisierungstemperatur.

Dementsprechend ist die werkstofftechnische Entwicklung eines geeigneten Trägerbandes für den erfindungsgemäßen Werkstoffverbund von großer Bedeutung. Es wurden daher Wärmebehandlungsversuche durchgeführt, wobei Proben in Salzbad gehärtet und anschließend zweimal angelassen wurden. Anschließend wurde die Härte, sowie die Zugfestigkeit bestimmt. Der Einfluss von Härte- bzw. Anlasstemperatur auf die genannten Eigenschaften ist in der folgenden Tabelle 1 zusammengefasst. Man erkennt, dass unabhängig von der Wärmebehandlung die Festigkeitswerte des erfindungsgemäßen Trägermaterials höher, als die Festigkeitswerte des konventionellen Kohlenstoffstahls, sind.

**Tabelle 1: Einfluss von Härtetemperatur und Anlasstemperatur auf die Zugfestigkeit sowie Härte von unterschiedlichen Trägerbandmaterialien nach einer Salzbadhärtung.**

| Trägerbandmaterial | Härtetemperatur [°C] | Anlasstemperatur [°C] | Zugfestigkeit [MPa] | Härte [HV] |
|---|---|---|---|---|
| 63NiNb4 | 810 | 250 | 2205 | 649 |
| | | 270 | 2090 | 630 |
| | 830 | 250 | 2205 | 625 |
| | | 270 | 2035 | 601 |
| Erfindung | 1140 | 520 | 2330 | 658 |
| | | 540 | 2430 | 660 |
| | | 560 | 2264 | 652 |
| | 1160 | 520 | 2140 | 674 |
| | | 540 | 2380 | 703 |
| | | 560 | 2460 | 712 |

Des Weiteren wurden Wärmebehandlungsversuche durchgeführt, wobei Proben in einem Vakuumofen bei unterschiedlichen Temperaturen gehärtet und anschließend zweimal bei 550°C angelassen wurden. Anschließend wurden ebenfalls die Härte sowie die Zugfestigkeit bestimmt. Der Einfluss von Härte- bzw. Anlasstemperatur auf Zugfestigkeit und Härte sind in der folgenden Tabelle 2 zusammengefasst.

**Tabelle 2: Einfluss von Härtetemperatur und Anlasstemperatur auf die Zugfestigkeit sowie Härte auf das erfindungsgemäße Trägerband nach einer Vakuumhärtung.**

| Trägerbandmaterial | Härtetemperatur [°C] | Anlasstemperatur [°C] | Zugfestigkeit [MPa] | Härte [HV] |
|---|---|---|---|---|
| Erfindung | 1030 | 550 | 2370 | 700 |
| | 1050 | | 2505 | 742 |
| | 1070 | | 2435 | 735 |

## Patentansprüche

1. Schneidglied (11) für eine Sägekette mit einem Trägerteil (16) aus einer bruchfesten Stahllegierung und ein mit dem Trägerteil (16) entlang einer Schweißverbindung (18) verschweißten Schneidteil (17) aus einem Schnellarbeitsstahl,
**dadurch gekennzeichnet, dass**
das Stahlmaterial des Trägerteils (16) im vergüteten Zustand eine Härte von mehr als 600 HV und eine Zugfestigkeit von mehr als 2000 MPa aufweist.

2. Schneidglied gemäß Anspruch 1, **dadurch gekennzeichnet, dass** die Stahllegierung des Trägerteils (16) im vergüteten Zustand eine Härte zwischen 630 und 750 HV und eine Zugfestigkeit zwischen 2100 und 2500 MPa aufweist.

3. Schneidglied gemäß einem der Ansprüche 1 oder 2, **dadurch gekennzeichnet, dass** die Stahllegierung des Trägerteils (16) ein Werkzeugstahl ist.

4. Schneidglied gemäß Anspruch 3, **dadurch gekennzeichnet, dass** die Stahllegierung des Trägerteils (16) folgende Zusammensetzung aufweist (Angaben in Gew.%):
| | |
|---|---|
| Kohlenstoff (C) | 0,4 bis 1,0 |
| Silicium (Si) | bis 1,8 |
| Mangan (Mn) | bis 0,6 |
| Chrom (Cr) | 4,5 bis 12 |
| Molybdän (Mo) | bis 3 |
| Vanadium (V) | bis 2 |
| Eisen (Fe) und erschmelzungsbedingte Begleitelemente und Verunreinigungen als Rest. | |

5. Schneidglied gemäß Anspruch 4, **dadurch gekennzeichnet, dass** die Stahllegierung des Trägerteils (16) folgende Zusammensetzung aufweist (Angaben in Gew.%):
| | |
|---|---|
| Kohlenstoff (C) | 0,45 bis 0,8 |
| Silicium (Si) | bis 1,3 |
| Mangan (Mn) | bis 0,6 |
| Chrom (Cr) | 6 bis 10 |
| Molybdän (Mo) | bis 1,6 |
| Vanadium (V) | bis 1 |
| Eisen (Fe) und erschmelzungsbedingte Begleitelemente und Verunreinigungen als Rest. | |

6. Schneidglied gemäß einem der Ansprüche 1 bis 5, **dadurch gekennzeichnet, dass** der Schnellarbeitsstahl des Schneidteils (17) folgende Zusammensetzung aufweist (Angaben in Gew.%):
| | |
|---|---|
| Kohlenstoff (C) | 0,5 bis 1,1 |
| Silicium (Si) | bis 0,5 |
| Mangan (Mn) | bis 0,5 |
| Chrom (Cr) | 3,5 bis 4,5 |
| Molybdän (Mo) | 2 bis 6 |
| Vanadium (V) | 0,5 bis 3,0 |
| Wolfram (W) | bis 3 |
| Cobalt (Co) | bis 10 |
| Eisen (Fe) und erschmelzungsbedingte Begleitelemente und Verunreinigungen als Rest. | |

7. Schneidglied gemäß einem der Ansprüche 1 bis 6, **dadurch gekennzeichnet, dass** das Stahlmaterial des Trägerteils (16) und der Schnellarbeitsstahl des Schneidteils (17) einen Werkstoffverbund bilden, welcher mit Laser oder Elektronenstrahl über eine Schweißnaht (18) verschweißt sind, wobei die Schweißnaht in einem wenig belasteten Bereich des Schneidglieds (11) liegt.

8. Schneidglied gemäß einem der Ansprüche 1 bis 7, **dadurch gekennzeichnet, dass** die geometrisch schmälere Unterraupe der Schweißnaht (18) auf der Außenseite (22) des Schneidglieds (11) und die Oberraupe der Schweißnaht (18) auf der Innenseite (21) des Schneidglieds (11) angeordnet ist.

9. Schneidglied gemäß einem der Ansprüche 1 bis 8, **dadurch gekennzeichnet, dass** das Schneidglied (11) einen Tiefenbegrenzer (20) aufweist, der zumindest teilweise aus Schnellarbeitsstahl besteht.

10. Sägekette für Motorkettensägen, die Treibglieder (12), Schneidglieder (11) gemäß einem der Ansprüche 1 bis 9 und gegebenenfalls Zwischenglieder (15) umfasst, welche mit Bolzen oder Nieten (14) beweglich miteinander verbunden sind.

11. Verfahren zur Herstellung von Schneidglieder nach einem der Ansprüche 1 bis 9, wobei
wenigstens ein erstes flächiges Bandmaterial (31) aus Schnellarbeitsstahl an dessen beiden Bandkanten entlang ein zweites (32) bzw. drittes flächiges Bandmaterial (33) aus einer vergütbaren und bruchfesten Stahllegierung angeordnet wird;
die ersten, zweiten und dritten flächigen Bandmaterialien (31,32,33) entlang der Bandkanten mittels Schweißnähten (18) zur Bildung eines Werkstoffverbundbandes (30) miteinander verschweißt werden;
die Schneidglieder (11) derart aus dem Werkstoffverbundband (30) entnommen werden, dass das Trägerteil (16) eines Schneidgliedes (11) aus dem zweiten oder dritten flächigen Bandmaterial (32, 33) und das Schneidteil (17) eines Schneidgliedes (11) aus dem ersten flächigen Bandmaterial (31) besteht;
und
die Schneidglieder (11) zum Härten auf eine Temperatur oberhalb der Austenitisierungstemperatur des Schnellarbeitsstahls erhitzt, wieder abkühlt und gegebenenfalls mehrfach angelassen werden.

12. Verfahren gemäß Anspruch 11, **dadurch gekennzeichnet, dass** die Temperatur oberhalb der Austenitisierungstemperatur des Schnellarbeitsstahls mehr als 1000 °C beträgt.

13. Verfahren gemäß Anspruch 11, **dadurch gekennzeichnet, dass** die Temperatur oberhalb der Austenitisierungstemperatur des Schnellarbeitsstahls zwischen 1050 und 1200 °C beträgt.
